# EUROPEAN PATENT APPLICATION

(11) **EP 0 965 820 A1**
(43) Date of publication of application: **22.12.1999**
(21) Application number: 99110886.1
(22) Date of filing: 07.06.1999
(51) Int. Cl.: G01D 11/28, G12B 11/04, B60K 35/00

(54) **A back-lit indicator device substantially free from halos of light around the pointer for vehicle dashboards**

(30) Priority: 19.06.1998 IT MI981418
(71) Applicant: MAGNETI MARELLI S.p.A., 20145 Milano (IT)
(72) Inventor: Agostini, Roberto, 20090 Trezzano Sul Naviglio (IT); Fallini, Andrea, 20025 Legnano (IT); Granatieri, Antonio, 20157 Milano (IT); Murano, Pasquale, 20017 Rho (IT)
(74) Representative: Eccetto, Mauro

(57) **Abstract**

A back-lit indicator device (1) including a support plane (3) for a graphical indicator panel (4), a pointer (5) mounted movably through the support plane (3) in order to cooperate with the graphical panel and a cavity (6) underlying the support plane for the graphical panel and housing a light source (7), the pointer (5) including a light guide (12) which projects into the cavity (6) through a through hole in the support plane for the graphical panel, possibly bounded by a light guide for the graphical panel mounted below the support plane (3) for the graphical panel, in which the light guide (12) for the pointer is covered, at the location of the through hole and together therewith, by an opaque nut (18) shaped as a hood and borne rigidly by the pointer, in which an annular projecting member (22) is provided around the whole of the through hole and projects above the support plane of the graphical panel and towards the nut, and is made, like the latter, from an opaque material, at least one lateral surface portion (24) of the nut (18) and a lateral inner or outer surface of the annular member (22) being mounted coaxially and facing one another in order to create an optical labyrinth (29) adapted to prevent the projection of halos of light around the pointer (5) on the support plane (3) for the graphical panel (4).

## Description

The present invention relates to an indicator device back-lit both with respect to the pointer and, possibly, the graphical panel, which is particularly adapted for use on vehicle dashboards, since it is structured such that in use it is substantially free from projections of undesirable halos of light on the graphical panel around the pointer.

It is known that indicator devices comprise a support plane for a graphical indicator panel (which may be formed by a calibrated scale of any kind and/or by a group of ideograms) and at least one pointer cooperating with the graphical indicator panel in order to provide the user with one or a plurality of analog data; conventionally, the pointer is movable and is formed by a needle keyed on a rotary pin. In back-lit devices, the light source is disposed in a cavity disposed below the support plane for the graphical indicator panel and one or a plurality of light guides collect the light via a hole in the plane, for instance the hole through which the rotary pin of the pointer passes, and convey it in order to illuminate the graphical panel and/or the pointer depending on whether the light guide is provided rigidly with the support plane of the graphical panel and/or with the pointer or a part thereof.

In indicator devices of the type described above, part of the light generated by the source may be reflected abnormally on the surfaces of the light guide(s) and/or other surrounding members of the device, with the resultant formation, through the above- mentioned hole, of an annular crown or halo of light which is projected on the support plane of the graphical panel with unappealing and in particular irritating effects for the user looking at the instrument.

The object of the invention is to provide a back-lit indicator device of the type described above which is free from this drawback, but which is, overall, very simple to produce and assemble and is of reduced bulk and cost.

According to the invention, a back-lit indicator device is therefore provided, in particular for vehicle dashboards, comprising a support plane for a graphical indicator panel, at least one pointer mounted through the support plane in order to cooperate with the graphical panel, and at least one cavity below the plane for the graphical panel which houses a light source, the pointer comprising a light guide which projects towards the cavity housing the light source via a through hole in the plane of the graphical panel, the pointer being provided rigid with an opaque nut disposed to cover the light guide and the through hole, characterised in that it further comprises an annular projecting member which projects above the plane of the graphical panel and towards the nut, which annular projecting member is formed, in the same way as the nut, from an opaque material that is substantially impervious to light, at least a portion of a lateral surface of the nut and a lateral surface of the annular member being mounted coaxially and facing one another in order to create an optical labyrinth adapted to prevent the projection of halos of light around the pointer and on the graphical panel.

In this way, the light that emerges through the reflecting surfaces of the light guide and/or the other components above the access hole to the cavity housing the light source cannot go beyond the barrier formed by the facing opaque lateral surfaces defined between the nut and the annular projecting member, thereby preventing the formation of undesirable halos of light around the pointer.

Further characteristic features and advantages of the present invention are set out in the following non-limiting description of two embodiments thereof, given purely by way of example and made with reference to the accompanying drawings, in which:
Fig. 1 is a top plan view of a back-lit indicator device of the invention;
Fig. 2 is a view in elevation of the indicator device of Fig. 1, shown in section along the line II-II;
Figs. 3, 4 and 5 show the same cross-sectional view as Fig. 2 through three possible variants of the device of the invention.

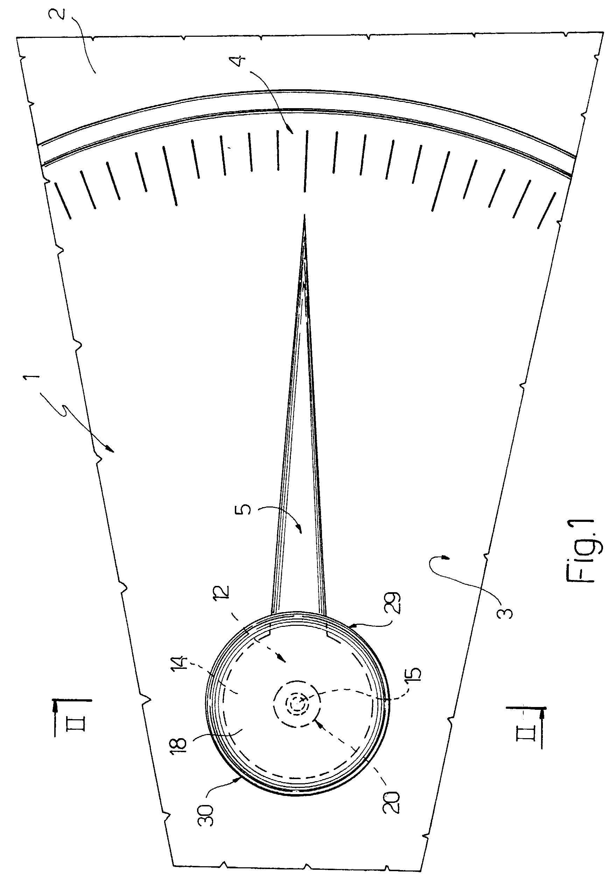

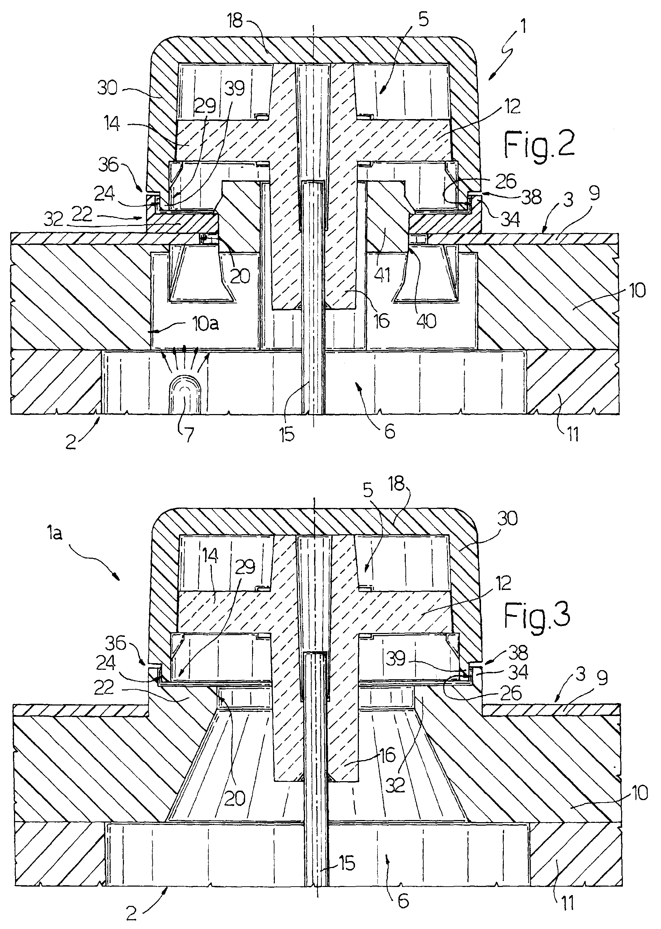

In Figs. 1 and 2, a back-lit indicator device, in particular adapted for use on a dashboard 2 (only part of which is shown in diagrammatic form for simplicity) of a vehicle, for instance an automobile vehicle, is shown overall by 1; the indicator device 1 comprises a support plane 3 for a graphical indicator panel 4, shown in a non-limiting manner as a calibrated scale, but which may also be formed by a set of ideograms, at least one pointer 5 mounted through the support plane 3 in order to cooperate with the graphical indicator panel 4 in order to provide the user with analog data, and at least one cavity 6 below the support plane 3 for the graphical indicator panel 4 which houses a light source, shown diagrammatically by 7 in Fig. 2, for instance a lamp, an LED or any other known light source.

In the non-limiting embodiment shown in Fig. 2, the plane 3 with the relative graphical panel 4 is formed by a sheet 9 borne by an intermediate member 10 partly bounding the cavity 6 and supported in turn on an underlying support 11, obtained for instance integrally with the dashboard 2 as it forms an integral part thereof, in the same way as the remaining part of the cavity 6 (not shown); the pointer 5 is of the back-lit type and comprises a light guide 12 made from a transparent material of low absorbance, disposed along at least part of the pointer 5 and projecting through the plane 3 into the cavity 6 housing the light source 7 in order to obtain from the latter the light needed to illuminate the pointer 5.

The graphical panel 4 may, in turn, be lit by an external light source (not shown) borne by the dashboard 2 on one side of the plane 3, in which case the intermediate member 10 is formed from an opaque material, or may in turn be of the back-lit type, in which case the sheet 9 is provided with transparent areas and the member 10 is also made from a material of low absorbance, in order wholly or partly to form a light guide 10a conveying the light from the source 7 below the graphical panel 4 to be illuminated.

In the embodiment shown, the pointer 5 is a moving pointer, in which the light guide 12 forms at least part of a hub 14 for the pointer 5, which hub 14 is keyed on a known rotary control pin 15 which is mounted in a known manner, not shown for simplicity, through the cavity 6, and is in turn connected, for instance, to the moving components of a known instrument forming part of the dashboard 2.

The hub 14 in particular comprises an assembly projection 16 which projects from the side opposite an opaque nut 18 covering the hub 14, coaxially with the pin 15, on which it is keyed in an angularly rigid manner; in this way, the projection 16 is formed entirely by the light guide 12 and projects into the cavity 6 in order to collect the light generated by the source 7, in this case via a through access hole 20 to the cavity 6 obtained through the plane 3 and, in particular, to the member 10, in order to communicate with the cavity 6 and at the same time to receive the pin 15 projecting beyond the plane 3.

The nut 18 is made from a plastic impervious to light and is cup-shaped in order to define a substantially cylindrical hood fitted externally on the hub 14, on the side opposite the pin 15, and adapted fully to cover the hub 14, in order to conceal not only the hub 14, but also the underlying hole 20, from an observer facing the graphical panel 4 and to screen the light source 7.

In this way, the only light emerging from the cavity 6 should be that collected by the light guide 12 (and by the possible light guide 10a) of the member 10; in known indicator devices, however, the structure described is not sufficient to prevent part of the light from the source 7 from being reflected in an abnormal manner and, therefore, emerging from below the nut 18 so as to form a halo or crown of undesired light around the hub 14 on the plane 3.

According to the invention, therefore, the indicator device 1 further comprises an annular projecting member 22 which projects above the support plane 3 for the graphical panel 4 and towards the nut 18; the member 22 is made, in the same way as the nut 18, from an opaque material substantially impervious to light; moreover, again according to the invention, at least a portion of a lateral surface 24 of the nut 18 and a lateral surface 26 of the member 2 are mounted coaxially and facing one another in order to create an optical labyrinth 29 adapted to prevent the projection of undesirable halos of light around the pointer 5 and on the plane 3 of the graphical panel 4.

According to the embodiment shown in Fig. 2, the annular projecting member 22 is formed by a ring having an external diameter substantially identical to that of a cylindrical lateral wall 30 of the nut 18, with respect to which the ring 22 is mounted coaxially, but rigidly with the plane 3. The ring 22 comprises an annular flange 32 coaxially surrounding the through hole 20 and partially screening the latter, and a cylindrical annular projection 34 projecting axially from the flange 32 and towards the nut 18, substantially flush with the radially outer surface of the wall 30 of the nut 18.

In combination with the above-described structure of the ring 22, the lateral wall 30 of the nut 18 has a lower edge 36 facing the annular flange 32, provided radially on the exterior, at the location of the projection 34, of an annular groove 38 separating the edge 36 from an annular cylindrical projection 39 matching 34. Moreover, the nut 18 and the member 22 are reciprocally disposed such that the annular projection 34 is housed in the groove 38, in a concentric manner and facing, with radial play, the matching annular projection 39, such that the inner lateral surface 26 of the projection 34 and the outer lateral surface 24 of the projection 39 define the above-mentioned optical labyrinth 29 between one another, while being rotary with respect to one another, the surface 24 being movable rigidly with the nut 18 and the pointer 5, on the hub 14 of which the nut 18 is rigidly mounted, and the surface 26 being connected in a fixed manner to the plane 3.

For this purpose, the annular flange 32 of the ring 22 is supported in abutment against an annular portion of the plane 3 immediately surrounding the hole 20 and is locked in a known snap-locking manner on a cylindrical abutment 40 of a collar 41 disposed within the hole 20 and connected rigidly to the plane 3. This collar 41 is in this case obtained rigidly with the intermediate member 10 which, in this case, is preferably made from a material with low absorbance in order to form the light guide 10a for the back-lighting of the graphical panel 4.

With reference to the variants shown in Figs. 3, 4 and 5, where similar or identical details to those already described are shown for the sake of simplicity by the same reference numerals, Fig. 3 illustrates a variant 1a of the device 1, in which the structure forming the optical labyrinth 29 is identical to that described in Fig. 2, except that the ring 22, rather than being provided as a member independent from the plane 3, to which it is then connected, is provided as an integral part of the plane 3; the ring 22 is in particular provided rigidly with the intermediate member 10 and projects from the plane 3; in this case, the member 10 has to be formed from an opaque material as a result of which it cannot act as a light guide.

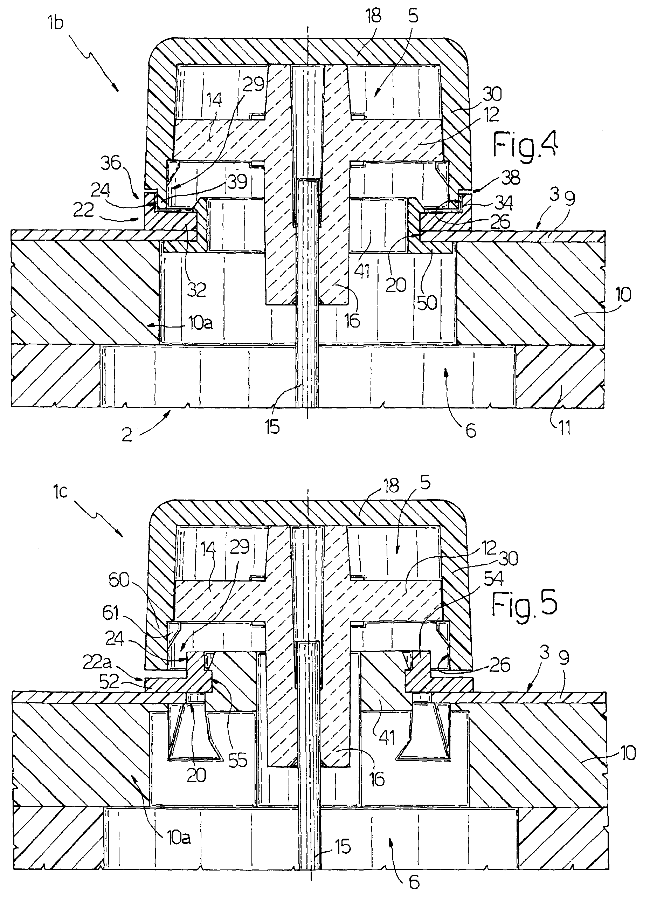

Fig. 4 shows a variant 1b of the device of the invention substantially identical to the embodiment 1 of Fig. 2, except that the collar 41 is provided rigidly with a flange member 50 mounted in abutment against the portion of the support plane 3 immediately surrounding the hole 20, on the side opposite the ring 22, in order to form with the latter a pack structure between which the portion of the plane 3 surrounding the hole 20 is clamped.

A further possible variant is provided by the possibility of duplicate moulding of the two members 34 and 50 of Fig. 4 directly on the graphical panels 9.

Lastly, Fig. 5 shows a variant 1c identical to that of Fig. 2, except that the ring 22 is replaced by a ring 22a comprising an annular flange 52 coaxially surrounding the hole 20 and a cylindrical annular projection 54 obtained in the vicinity of a radially inner edge 55 of the annular flange 52, projecting axially from the flange 52 towards the nut 18, such that the outer lateral surface 24 of the projection 54 and the cylindrical inner lateral surface 26 of the lateral wall 30 of the nut 18 define the optical labyrinth 29 between one another. For the remainder, the system for the snap-locking of the ring 22a on the collar 41 rigid with the member 10 is substantially identical to that described above.

In all the embodiments shown, it should be noted that the nut 18 is fixed so as to cover the hub 14 in a snap-locking manner by respective elastic projections 60 (Fig. 5) provided with teeth 61 which engage the hub 14 on the side facing the plane 3.

## Claims

1. A back-lit indicator device, in particular for vehicle dashboards, comprising a support plane for a graphical indicator panel, at least one pointer mounted through the support plane in order to cooperate with the graphical panel and at least one cavity below the plane for the graphical panel which houses a light source, the pointer comprising a light guide which projects towards the cavity housing the light source through a through hole in the plane for the graphical panel, the pointer being provided rigidly with an opaque nut disposed to cover the light guide and the through hole, characterised in that it further comprises a projecting annular member which projects above the support plane for the graphical panel and towards the nut, which annular projecting member is made, in the same way as the nut, from an opaque material substantially impervious to light, at least a portion of a lateral surface of the nut and a lateral surface of the annular member being mounted coaxially and facing one another in order to create an optical labyrinth adapted to prevent the projection of halos of light around the pointer and on the plane of the graphical panel.

2. An indicator device as claimed in claim 1, characterised in that the pointer is a moving pointer, the light guide forming at least part of a hub of this pointer, which hub is keyed on a rotary control pin mounted through the hole and the cavity housing the light source, the hub being entirely covered by the opaque nut which is cup-shaped and forms a substantially cylindrical hood fitted externally on the hub on the side opposite the pin.

3. An indicator device as claimed in claim 2, characterised in that the annular projecting member is formed by a ring having an external diameter substantially identical to that of a cylindrical lateral wall of the nut, with respect to which it is coaxially mounted rigidly with the support plane for the graphical panel.

4. An indicator device as claimed in claim 3, characterised in that the ring comprises an annular flange coaxially surrounding the through hole and a first cylindrical annular projection projecting axially from the annular flange and towards the nut, substantially flush with the cylindrical lateral wall of the nut.

5. An indicator device as claimed in claim 4, characterised in that the cylindrical lateral wall of the nut has a lower edge facing the annular flange, provided radially on the exterior, and at the location of the first projection, of an annular groove separating this lower edge from a second cylindrical annular projection, the nut and the annular projecting member being reciprocally disposed such that the first annular projection is housed in the annular groove, concentrically to and facing, with radial play, the second annular projection, such that the inner lateral surface of the first annular projection and the outer lateral surface of the second annular projection define the optical labyrinth between one another.

6. An indicator device as claimed in claim 3, characterised in that the ring comprises an annular flange coaxially surrounding the through hole, and a cylindrical annular projection obtained in the vicinity of a radially inner edge of the annular flange and projecting axially from this annular flange towards the nut, such that the outer lateral surface of this cylindrical annular projection and a cylindrical inner lateral surface of the lateral wall of the nut define the optical labyrinth between one another.

7. An indicator device as claimed in any one of claims 3 to 6, characterised in that the plane and the graphical panel are formed by a sheet borne by an intermediate member partly bounding the cavity and borne in turn on an underlying support, the annular flange being supported in abutment against a portion of the support plane for the graphical panel immediately surrounding the through hole and being snap locked on a cylindrical abutment of a collar disposed within the hole and connected rigidly to the support plane for the graphical panel.

8. An indicator device as claimed in any one of claims 3 to 6, characterised in that the ring is obtained rigidly with the intermediate member which is made from an opaque material.

9. An indicator device as claimed in claim 7, characterised in that the collar is obtained rigidly with the intermediate member, which is made from a material of low absorbance in order to form a light guide for the back lighting of the graphical panel.

10. An indicator device as claimed in claim 7, characterised in that the collar is obtained rigidly with a flange member mounted in abutment against the portion of the support plane for the graphical panel immediately surrounding the through hole, on the side opposite the ring, in order to form with the latter a pack structure between which the portion of the support plane for the graphical panel is clamped.

11. An indicator device as claimed in any one of claims 3 to 6, characterised in that the plane and the graphical panel are formed by a sheet borne by an intermediate member partly bounding the cavity and borne in turn by an underlying support, the annular flange being borne in abutment against a portion of the support plane for the graphical panel immediately surrounding the through hole and being connected to a cylindrical abutment of a collar disposed within the hole and obtained rigidly with a flange member also mounted in abutment against the portion of the support plane for the graphical panel immediately surrounding the through hole, on the side opposite the ring, this annular flange, collar and flange member being obtained by duplicate moulding directly on the support plane for the graphical panel in order to form a rigid structure between which the latter is clamped.
